# EUROPÄISCHE PATENTSCHRIFT

(11) **EP 1 816 316 B1**
(45) Veröffentlichungstag und Bekanntmachung des Hinweises auf die Patenterteilung: **07.01.2009**
(21) Anmeldenummer: 06001466.9
(22) Anmeldetag: 24.01.2006
(51) Int. Cl.: F01D 5/00, C23C 24/00, C23C 4/18

(54) **Bauteilreparaturverfahren**
Method for Repairing a Component
Procédé de réparation de composants

(43) Veröffentlichungstag der Anmeldung: 08.08.2007
(73) Patentinhaber: SIEMENS AKTIENGESELLSCHAFT, 80333 München (DE)
(72) Erfinder: Birkner, Jens, 45481 Mülheim an der Ruhr (DE); Esser, Winfried, Dr., 44805 Bochum (DE)

(56) Entgegenhaltungen:
- EP-A- 0 924 306
- EP-A- 0 993 898
- EP-A- 1 338 670
- EP-A- 1 498 509
- EP-A- 1 522 608
- US-A- 3 676 085
- US-A- 5 525 429
- US-A- 6 042 898
- US-A1- 2002 094 447
- US-A1- 2002 096 503
- US-A1- 2003 029 522
- US-B1- 6 340 500
- GAO YANG: "Formation and Behaviour of Thermal Barrier Coatings on Ni-base Superalloys" TRANS. NONFERROUS MET.SOC.CHINA, Bd. 14, Nr. 1, Februar 2004 (2004-02), Seiten 44-48, XP009064376 China

## Beschreibung

Die Erfindung betrifft ein Bauteilreparaturverfahren nach dem Oberbegriff des Anspruchs 1.

Hohle Bauteile, wie z.B. Bauteile einer Gasturbine, z.B. Lauf- oder Leitschaufeln, die im Betrieb durch Oxidation, Hochtemperaturkorrosion etc., insbesondere lokal einen Wanddickenverlust erlitten haben, werden durch das Aufspritzen von Material repariert. Das Pulver für die Schicht wird mittels Plasmaspritzen (VPS: vacuum plasma spraying) oder Hochgeschwindigkeitsspritzen (HVOF) aufgebracht. Diese Schicht besitzt aufgrund ihres feinen Gefüges, d.h. sehr kleine Korngrößen, nur bei niedrigen Einsatztemperaturen bis ca. 500°C dem Grundwerkstoff des Bauteils entsprechende Festigkeitseigenschaften auf. Oberhalb von 500°C nimmt in die mechanische Festigkeit des Werkstoffs in den repartierten Bereich stark ab. Dies ist bedingt durch das sehr feine Gefüge der Beschichtung, die ein Gleiten entlang der Partikel/Korngrenzen bei höheren Temperaturen erlauben.

Als alternative Verfahren sind Schweiß- oder Lötverfahren bekannt, die jedoch die bekannten Nachteile wie Heißrissbildung, Bildung von Sprödphasen usw. aufweisen.

Es ist daher Aufgabe der Erfindung ein Verfahren aufzuzeigen, das oben genanntes Problem überwindet.

Die Aufgabe wird gelöst durch ein Bauteilreparaturverfahren gemäß Anspruch 1.

Der Vorteil liegt in der Verstärkung des Kornwachstums in einer Schicht durch bewusste, vorherige Einbringung von Eigenspannungen in diese Schicht.

Die in den Unteransprüchen aufgelisteten Maßnahmen können beliebig miteinander kombiniert werden, um weitere Vorteile zu erzielen.

Die Erfindung wird anhand der Zeichnungen näher erläutert.

Es zeigen:
- Figur 1: schematisch den Ablauf des erfindungsgemäßen Verfahrens,
- Figur 2: eine Liste von Superlegierungen,
- Figur 3: eine Gasturbine,
- Figur 4: eine perspektivische Ansicht einer Turbinenschaufel und
- Figur 5: eine perspektivische Ansicht einer Brennkammer.

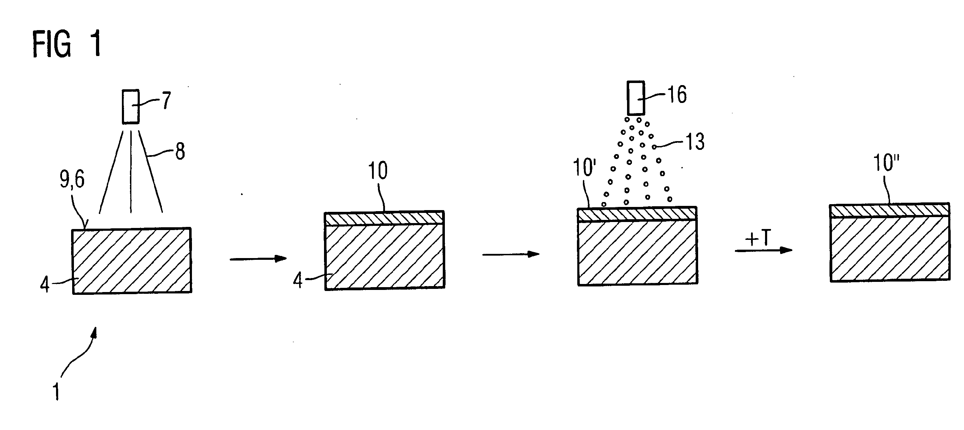

Die Figur 1 zeigt schematisch den Ablauf des erfindungsgemäßen Verfahrens.
Das Bauteil 1, das repariert werden soll, also dessen Wandstärke erhöht werden soll, besteht aus einem Substrat 4 mit einer Oberfläche 5.

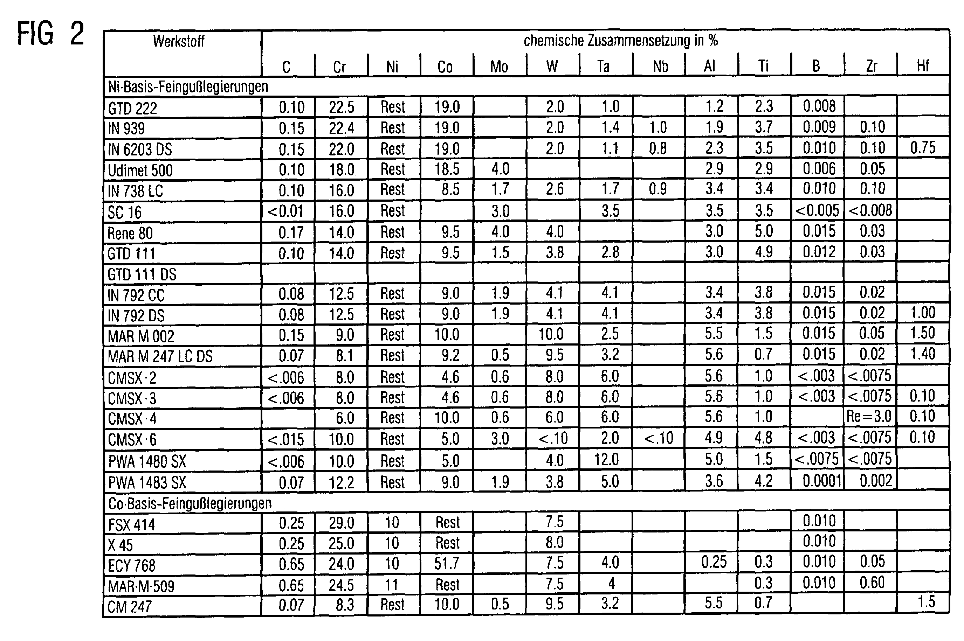

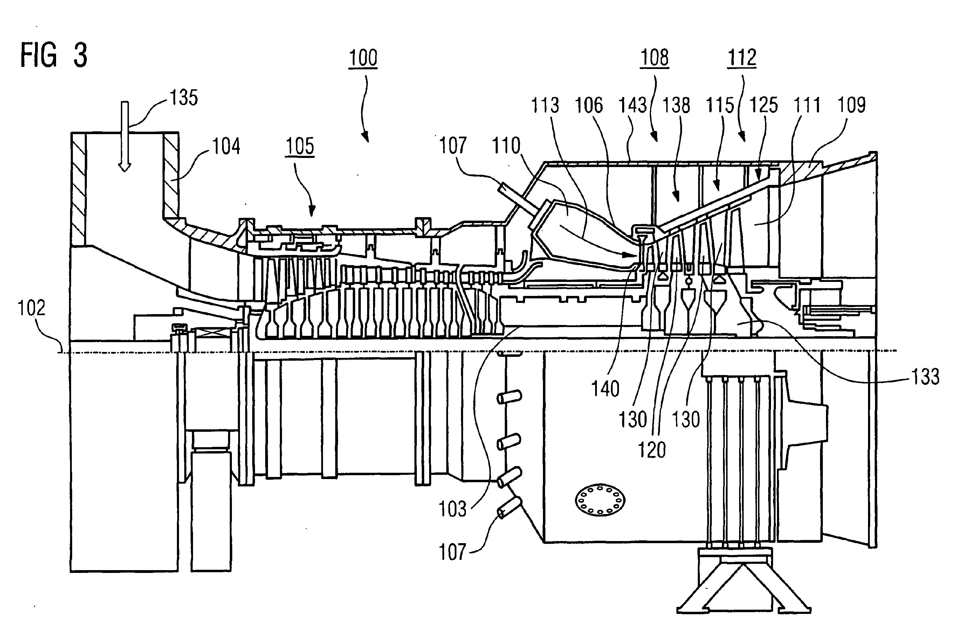

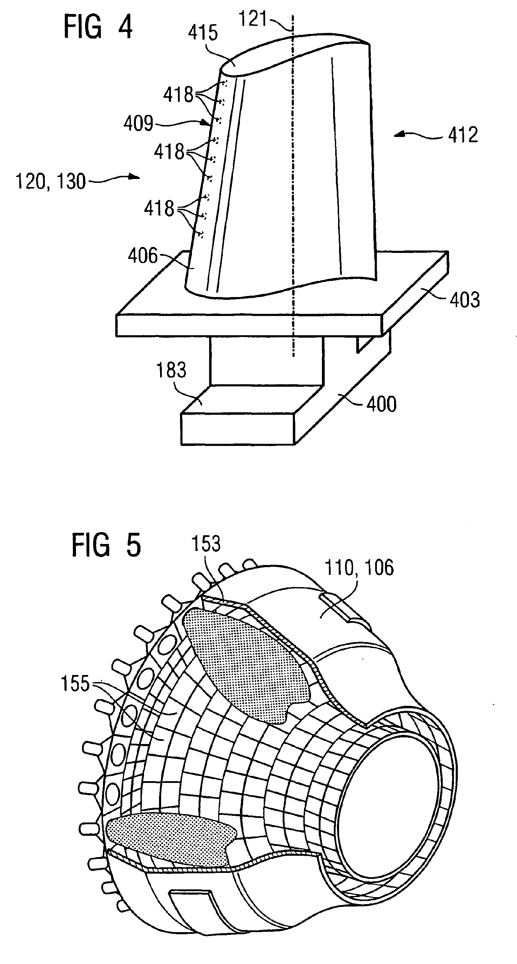

Das Substrat 4 besteht insbesondere bei Bauteilen für Hochtemperaturanwendungen wie z.B. Gasturbinen 100 (Fig. 3), insbesondere bei Turbinenschaufeln 120, 130 (Figur 4) oder Brennkammerelementen 155 (Fig. 5) aus nickel- oder kobaltbasierten Superlegierungen (Fig. 2).

Im ersten Verfahrensschritt kann die zu reparierende Fläche 6 aufbereitet werden, d.h. von Oxiden oder sonstigen Verunreinigungen gesäubert werden und/oder vorzugsweise auch durch mechanische Bearbeitung vergleichmäßigt werden, beispielsweise in eine Vertiefung mit gleicher Tiefe umgewandelt werden. Die zu reparierende Fläche 6 ist vorzugsweise ein Teil der Oberfläche 5 des Substrats 4. Das Verfahren stellt also vorzugsweise ein lokales Reparaturverfahren dar.

Dann wird auf die Oberfläche 6 Material 8 aufgetragen, das beispielsweise aus einer Plasmadüse oder einem Ingot einer Elektronenstrahlverdampfanlage, usw. stammt. Weitere Auftragungsarten (VPS, HVOF, Kaltgasspritzen) sind möglich.
Das Material 8 weist vorzugsweise eine identische Zusammensetzung wie das Material des Substrats 4 auf. Für die Zusammensetzung des Materials 8 wird eine ähnliche Zusammensetzung des Substrats 4 gewählt, d.h. Abweichungen in der Konzentration der einzelnen Elemente der Legierung liegen bei mindestens 1% und maximal bei 10% bis 20% und alle Elemente des Substrats 4 sind in dem Material 8 vorhanden, ggfs. bis auf die Anteile, die mit < 1wt% im Substrat 4 vorhanden sind. Weitere Elemente können vorhanden sein.

Nach dem Beschichtungsprozess als einem der ersten erfindungsgemäßen Verfahrensschritte ist eine Schicht 10 auf dem Substrat 4 entstanden, die jedoch ein feines Gefüge (insbesondere < 1µm), d. h. die Korngrößen sind bis 10-mal, insbesondere 100-mal kleiner als die im Substrat 4 mit den oben beschriebenen Nachteilen, aufweist.

In einem weiteren Verfahrensschritt des erfindungsgemäßen Verfahrens werden in diese Schicht 10 mechanische Eigenspannungen eingebracht, vorzugsweise durch plastische Verformung. Dies kann durch Kugelbestrahlung erfolgen, wobei Kugeln 13 aus einer Kugelstrahldüse 16 auf die Oberfläche 10 des Substrats 4 gelenkt werden oder durch Anrollieren. Andere Verfahren zur Einbringung von plastischen Verformungen, wie z.B. Laserbehandlung sind ebenfalls denkbar und können miteinander kombiniert werden.

Nach dieser plastischen Verformung wird mit der so modifizierten Schicht 10' in einem der letzten Verfahrensschritte des erfindungsgemäßen Verfahrens eine geeignete Wärmebehandlung, z.B. eine Lösungsglühung bei einer Lösungsglühtemperatur des Substrats 4, durchgeführt, die eine Rekristallation bewirkt und dann ein Kornwachstum stattfindet.
Ebenso kann die Wärmebehandlung bei einer Lösungsglühtemperatur oder sonstigen typischen Wärmebehandlungstemperatur (Diffusionsglühung) des Materials 8 der Schicht 10' durchgeführt werden.
Dieses grobkörnigere Gefüge der Schicht 10" hat Korngrößen , um 1mm, d. h. Korngrößen im Millimeter-Bereich, und weist die geforderte Festigkeit bei höheren Temperaturen auf und ist vergleichbar mit den mechanischen Eigenschaften des Substrats 4.

Auf diese Schicht 10" können dann wieder weitere Schichten aufgebracht werden: eine MCrAlX-Schicht und/oder eine keramische Schicht.

Die Figur 3 zeigt beispielhaft eine Gasturbine 100 in einem Längsteilschnitt.
Die Gasturbine 100 weist im Inneren einen um eine Rotationsachse 102 drehgelagerten Rotor 103 mit einer Welle 101 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer, mit mehreren koaxial angeordneten Brennern 107, eine Turbine 108 und das Abgasgehäuse 109.
Die Ringbrennkammer 110 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 110 auskleidenden Hitzeschildelementen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

Die Figur 4 zeigt in perspektivischer Ansicht eine Laufschaufel 120 oder Leitschaufel 130 einer Strömungsmaschine, die sich entlang einer Längsachse 121 erstreckt.

Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 und eine Schaufelspitze 415 auf.
Als Leitschaufel 130 kann die Schaufel 130 an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe, insbesondere Superlegierungen verwendet.
Solche Superlegierungen sind beispielsweise aus der EP 1 204 776 B1, EP 1 306 454, EP 1 319 729 A1, WO 99/67435 oder WO 00/44949 bekannt.Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.
Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweitgenannten kristallinen Strukturen spricht man auch von gerichtet erstarrten Gefügen (directionally solidified structures).
Solche Verfahren sind aus der US-PS 6,024,792 und der EP 0 892 090 A1 bekannt.

Ebenso können die Schaufeln 120, 130 Beschichtungen gegen Korrosion oder Oxidation aufweisen, z. B. (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf)). Solche Legierungen sind bekannt aus der EP 0 486 489 B1, EP 0 786 017 B1, EP 0 412 397 B1 oder EP 1 306 454 A1..Die Dichte liegt vorzugsweise bei 95% der theoretischen Dichte.
Auf der MCrAlX-Schicht (als Zwischenschicht oder als äußerste Schicht) bildet sich eine schützende Aluminiumoxidschicht (TGO = thermal grown oxide layer).

Auf der MCrAlX kann noch eine Wärmedämmschicht vorhanden sein, die vorzugsweise die äußerste Schicht ist, und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Die Wärmedämmschicht bedeckt die gesamte MCrAlX-Schicht. Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen. Die Wärmedämmschicht ist also vorzugsweise poröser als die MCrA1X-Schicht.

Die Schaufel 120, 130 kann hohl oder massiv ausgeführt sein.

Wenn die Schaufel 120, 130 gekühlt werden soll, ist sie hohl und weist ggf. noch Filmkühllöcher 418 (gestrichelt angedeutet) auf.

Die Figur 5 zeigt eine Brennkammer 110 der Gasturbine 100. Die Brennkammer 110 ist beispielsweise als so genannte Ringbrennkammer ausgestaltet, bei der eine Vielzahl von in Umfangsrichtung um eine Rotationsachse 102 herum angeordneten Brennern 107 in einen gemeinsamen Brennkammerraum 154 münden, die Flammen 156 erzeugen. Dazu ist die Brennkammer 110 in ihrer Gesamtheit als ringförmige Struktur ausgestaltet, die um die Rotationsachse 102 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen.

Aufgrund der hohen Temperaturen im Inneren der Brennkammer 110 kann zudem für die Hitzeschildelemente 155 bzw. für deren Halteelemente ein Kühlsystem vorgesehen sein. Die Hitzeschildelemente 155 sind dann beispielsweise hohl und weisen ggf. noch in den Brennkammerraum 154 mündende Kühllöcher (nicht dargestellt) auf.

Jedes Hitzeschildelement 155 aus einer Legierung ist arbeitsmediumsseitig mit einer besonders hitzebeständigen Schutzschicht (MCrAlX-Schicht und/oder keramische Beschichtung) ausgestattet oder ist aus hochtemperaturbeständigem Material (massive keramische Steine) gefertigt.
Diese Schutzschichten sind ähnlich der Turbinenschaufeln , also bedeutet beispielsweise MCrA1X: M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden, bzw. Hafnium (Hf). Solche Legierungen sind bekannt aus der EP 0 486 489 B1, EP 0 786 017 B1, EP 0 412 397 B1 oder EP 1 306 454 A1.

Auf der MCrAlX kann noch eine beispielsweise keramische Wärmedämmschicht vorhanden sein und besteht beispielsweise aus ZrO₂, Y₂O₃-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.
Andere Beschichtungsverfahren sind denkbar, z.B. atmosphärisches Plasmaspritzen (APS), LPPS, VPS oder CVD. Die Wärmedämmschicht kann poröse, mikro- oder makrorissbehaftete Körner zur besseren Thermoschockbeständigkeit aufweisen.

Wiederaufarbeitung (Refurbishment) bedeutet, dass Turbinenschaufeln 120, 130, Hitzeschildelemente 155 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse in der Turbinenschaufel 120, 130 oder dem Hitzeschildelement 155 repariert. Dann wird das erfindungsgemäße Reparaturverfahren zur Wiederherstellung einer vorgegebenen Wanddicke durchgeführt. Letztlich erfolgt eine Wiederbeschichtung der Turbinenschaufeln 120, 130, Hitzeschildelemente 155 und ein erneuter Einsatz der Turbinenschaufeln 120, 130 oder der Hitzeschildelemente 155.

## Patentansprüche

1. Bauteilreparaturverfahren,
bei dem ein Material (8) für eine Schicht (10) auf eine Oberfläche (6) eines Substrats (4) eines Bauteils (1, 120, 130, 138, 155) aufgebracht wird,
um durch die Schicht (10) eine Wandverdickung des Substrats (4) zu erreichen,
**dadurch gekennzeichnet,**
**dass** das Material (8) der Schicht (10) dem Material des Substrats (4) entspricht oder
**dass** das Material der Schicht (10) dem Material des Substrats (4) ähnelt,
**dass** nach dem Aufbringen der Schicht (10) auf das Substrat (4) Eigenspannungen in der Schicht (10) erzeugt werden, insbesondere durch eine plastische Verformung der Schicht (10) und
**dass** die Schicht (10) anschließend mittels einer Wärmebehandlung in eine Schicht (10'') mit grobkörnigerem Gefüge umgewandelt wird,
**dass** die Korngrößen der Schicht (10) vor Einbringung der Eigenspannungen und vor der Wärmebehandlung mindestens 10-mal,
insbesondere 100-mal,
kleiner sind als die Korngrößen des Substrats (4),
und **dass** die Korngrößen der Schicht (10'') nach der Wärmebehandlung im Millimeterbereich liegen,
insbesondere um 1mm.

2. Verfahren nach Anspruch 1,
**dadurch gekennzeichnet, dass**
die Eigenspannungen in der Schicht (10) mittels Kugelbestrahlung erzeugt werden.

3. Verfahren nach Anspruch 1 oder 2,
**dadurch gekennzeichnet, dass**
die Eigenspannungen in der Schicht (10) mittels Laserbestrahlung erzeugt werden.

4. Verfahren nach Anspruch 1, 2 oder 3,
**dadurch gekennzeichnet, dass**
die Wärmebehandlung einer mit Eigenspannungen behafteten Schicht (10') durch eine Lösungsglühung bei der Lösungsglühtemperatur des Substrats (4) erfolgt.

5. Verfahren nach Anspruch 1, 2 oder 3,
**dadurch gekennzeichnet, dass**
die Wärmebehandlung einer mit Eigenspannungen behafteten Schicht (10') durch eine Lösungsglühung bei der Lösungsglühtemperatur oder einer Wärmebehandlungstemperatur des Materials (8) der Schicht (10') erfolgt.

6. Verfahren nach einem oder mehreren der vorherigen Ansprüche,
**dadurch gekennzeichnet, dass**
ein Bauteil (120, 130, 155) einer Gasturbine (100), insbesondere eine Turbinenschaufel (120, 130), behandelt wird.

7. Verfahren nach einem oder mehreren der vorherigen Ansprüche,
**dadurch gekennzeichnet, dass**
die Schicht (10) nur lokal auf eine Oberfläche (6) des Substrats (4) des Bauteils (1, 120, 130, 138, 155) aufgebracht wird.

## Claims

1. Component repair process,
in which a material (8) for a layer (10) is applied to a surface (6) of a substrate (4) of a component (1, 120, 130, 138, 155), in order for the layer (10) to produce a wall thickening of the substrate (4),
**characterized**
**in that** the material (8) of the layer (10) corresponds to the material of the substrate (4), or in that the material of the layer (10) is similar to the material of the substrate (4),
**in that** after the layer (10) has been applied to the substrate (4), residual stresses are produced in the layer (10), in particular by plastic deformation of the layer (10), and
**in that** the layer (10) is then converted into a layer (10'') with a more coarse-grained microstructure by means of a heat treatment, in that the grain sizes of the layer (10) prior to the introduction of the residual stresses and prior to the heat treatment are at least 10 times, in particular 100 times smaller than the grain sizes of the substrate (4),
and **in that** the grain sizes of the layer (10'') following the heat treatment are in the millimeter range,
in particular around 1 mm.

2. Process as claimed in Claim 1,
**characterized in that**
the residual stresses in the layer (10) are produced by means of shot peening.

3. Process as claimed in Claim 1 or 2,
**characterized in that**
the residual stresses in the layer (10) are produced by means of laser irradiation.

4. Process as claimed in Claim 1, 2 or 3,
**characterized in that**
the heat treatment of a layer (10') which has been provided with residual stresses is carried out by a solution anneal at the solution-annealing temperature of the substrate (4).

5. Process as claimed in Claim 1, 2 or 3,
**characterized in that**
the heat treatment of a layer (10') which has been provided with residual stresses is carried out by a solution anneal at the solution-annealing temperature or a heat treatment temperature of the material (8) of the layer (10').

6. Process as claimed in one or more of the preceding claims,
**characterized in that**
a component (120, 130, 155) of a gas turbine (100), in particular a turbine blade or vane (120, 130), is treated.

7. Process as claimed in one or more of the preceding claims,
**characterized in that**
the layer (10) is applied only locally to a surface (6) of the substrate (4) of the component (1, 120, 130, 138, 155).

## Revendications

1. Procédé de réparation d'un élément,
dans lequel on dépose un matériau ( 8 ) pour une couche ( 10 ) sur une surface ( 6 ) d'un substrat ( 4 ) d'un élément ( 1, 120, 130, 138, 155 ),
pour obtenir par la couche un épaississement de paroi du substrat ( 4 ),
**caractérisé**
**en ce que** le matériau ( 8 ) de la couche ( 10 ) correspond au matériau du substrat ( 4 ) ou,
**en ce que** le matériau de la couche ( 10 ) est analogue au matériau du substrat ( 4 ),
**en ce qu'**après le dépôt de la couche ( 10 ) sur le substrat ( 4 ), il est produit des tensions propres dans la couche ( 10 ), notamment par une déformation plastique de la couche ( 10 ), et
**en ce que** l'on transforme la couche ( 10 ) ensuite au moyen d'un traitement thermique en une couche ( 10" ) ayant une structure à grains plus grossiers,
**en ce que** les dimensions de grains de la couche ( 10 ) avant la mise en oeuvre des tensions propres et avant le traitement thermique sont plus petites d'au moins 10 fois,
notamment 100 fois,
que les dimensions de grains du substrat ( 4 ),
et **en ce que** les dimensions de grains de la couche ( 10" ) après le traitement thermique sont de l'ordre du millimètre notamment, d'environ 1 mm.

2. Procédé selon la revendication 1,
**caractérisé en ce que**
on produit les tensions propres dans la couche ( 10 ) au moyen d'un grenaillage.

3. Procédé selon la revendication 1 ou 2,
**caractérisé e ce que**
on produit les tensions propres dans la couche ( 10 ) au moyen d'un rayonnement laser.

4. Procédé selon la revendication 1, 2 ou 3,
**caractérisé en ce que**
on effectue le traitement thermique d'une couche ( 10' ) ayant des tensions propres par un recuit de mise en solution du substrat ( 4 ).

5. Procédé selon la revendication 1, 2 ou 3,
**caractérisé en ce que**
on effectue le traitement thermique d'une couche ( 10' ) ayant des tensions propres par un recuit de mise en solution à la température de recuit de mise en solution ou à la température de traitement thermique du matériau ( 8 ) de la couche ( 10' ).

6. Procédé selon l'une ou plusieurs des revendications précédentes,
**caractérisé en ce que**
on traite un élément ( 120, 130, 155 ) d'une turbine ( 100 ) à gaz, notamment une aube ( 120, 130 ) de turbine.

7. Procédé selon l'une ou plusieurs des revendications précédentes,
**caractérisé en ce que**
on dépose la couche seulement localement sur une surface ( 6 ) du substrat ( 4 ) de l'élément ( 1, 120, 130, 138, 155 ).
